# FASCICULE DE BREVET EUROPEEN

(11) **EP 2 708 761 B1**
(45) Date de publication et mention de la délivrance du brevet: **04.05.2016**
(21) Numéro de dépôt: 13182760.2
(22) Date de dépôt: 03.09.2013
(51) Int. Cl.: F16B 5/02, F16B 5/04, F16B 19/00

(54) **Dispositif de fixation**
Befestigungsvorrichtung
Attachment device

(30) Priorité: 13.09.2012 FR 1258612
(43) Date de publication de la demande: 19.03.2014
(73) Titulaire: LISI Aerospace, 75012 Paris (FR)
(72) Inventeur: Pham, Charles, 95310 Saint Ouen L'Aumone (FR)
(74) Mandataire: Ipside

(56) Documents cités:
- FR-A1- 2 871 861
- US-A- 2 884 099
- US-A- 3 136 203
- US-A- 3 298 725
- US-A- 3 469 490
- US-A- 3 711 347

## Description

La présente invention se rapporte à un dispositif de fixation. L'invention trouve son application plus particulièrement, mais pas exclusivement, dans le domaine aéronautique.

Il est connu de l'art antérieur un dispositif de fixation, destiné à un montage en interférence avec une structure, comportant une vis s'étendant suivant un axe et comprenant une tête et un fût, ainsi qu'une douille s'étendant suivant l'axe de la vis et comprenant un corps accueillant le fût de la vis et une tête bloquant une translation de la douille selon l'axe de la vis lorsque la douille est en place dans un perçage. Un montage en interférence est un montage avec un jeu négatif. Dans l'art antérieur précité, le fût de la vis a un diamètre externe plus important que le diamètre interne de la douille qui va la recevoir, ce qui amène une expansion radiale de la douille dans le perçage durant l'installation de la vis, suffisante pour bloquer tout mouvement de translation du dispositif de fixation expansé dans le perçage. Un tel dispositif de fixation est par exemple décrit dans le document WO 2010/142901.

Un autre dispositif de fixation comprenant les caractéristiques du préambule de la revendication 1 est connu du document US 3,298,725 A.

Un tel dispositif de fixation est de manière classique assemblé à un élément de structure comprenant un perçage disposé selon l'axe de la vis. Or, la douille et le perçage sont généralement configurés de sorte qu'un interstice se forme entre un rayon sous tête de la douille et un rayon d'entrée du perçage. Un tel interstice permet de garantir un accostage total de la tête de la douille sur la structure.

Il est connu de l'art antérieur de déposer une couche de mastic frais sur une partie de l'élément de structure destinée à entrer en contact avec le dessous de la tête de la douille, de sorte à assurer l'étanchéité aux fluides, comme l'eau ou les carburants, de l'assemblage une fois le mastic sec.

Cependant, lors de l'étape de mise en place de la douille dans le perçage, du mastic frais peut venir se loger dans l'interstice formé entre le rayon sous tête de la douille et le rayon d'entrée du perçage. Lorsque la vis est insérée dans la douille et que le rayon sous tête de la douille se dilate radialement, le mastic est expulsé depuis l'interstice dans le perçage, et vient se répandre autour du corps de la douille.

La présence de mastic frais autour du corps de la douille est particulièrement problématique car un film lubrifiant se forme entre le corps de la douille et le perçage, affectant l'adhérence entre la douille et le perçage. Or, si l'adhérence entre la vis et la douille devient supérieure à l'adhérence entre la douille et le perçage, la douille est entraînée par la vis et s'allonge à mesure que la vis est insérée.

Un tel allongement de la douille entraîne par exemple un amincissement et une fragilisation de la zone sous tête de la douille, mais aussi une dilatation radiale incomplète de la douille et donc une interférence plus faible entre la douille et le perçage. La présence de mastic autour du corps de la douille affecte donc considérablement la qualité de l'assemblage, notamment en matière de tenue mécanique.

Il existe donc un besoin d'empêcher la couche de mastic frais de se répandre autour du corps de la douille.

Un aspect de la présente invention permet de résoudre ce problème technique.

Plus précisément, l'invention a pour objet un dispositif de fixation comportant les caractéristiques de la revendication 1.

Préférentiellement, l'anneau est formé d'un matériau comportant un polymère acrylique.

Plus préférentiellement, l'anneau est formé d'un matériau comportant en outre du mica.

Préférentiellement, l'anneau est disposé autour d'un rayon sous tête de la douille.

Préférentiellement, la tige est une vis ou un rivet comprenant une queue de traction.

L'invention a également pour objet un procédé de fabrication d'un dispositif tel que précédemment décrit, comprenant une étape de dépôt, sur la surface externe de la douille, d'un cordon d'un matériau polymère à l'état liquide ou visqueux, puis d'une polymérisation pour solidifier ledit matériau sous forme d'anneau.

L'invention a également pour objet un procédé d'assemblage d'un dispositif de fixation tel que précédemment décrit à un élément de structure, ledit élément comprenant un perçage, ledit perçage comprenant une paroi apte à recevoir avec jeu le corps de la douille, ledit procédé comprenant une étape de dépôt d'une couche d'une composition visqueuse ou liquide sur une partie de l'élément de structure destinée à entrer en contact avec la tête de la douille ; une étape de mise en place de la douille dans le perçage de l'élément de structure selon l'axe de la vis, de sorte que l'anneau vienne en compression contre la paroi du perçage ; puis une étape d'insertion de la tige dans la douille selon l'axe de la tige, de sorte que la douille se dilate radialement dans le perçage et que l'anneau se comprime entre la surface externe du corps de la douille et la paroi du perçage.

L'invention a également pour objet un assemblage d'un dispositif de fixation et d'un élément d'assemblage, ledit assemblage étant issu d'un procédé tel que précédemment décrit.

L'invention sera mieux comprise à la lecture de la description qui suit et à l'examen des figures qui l'accompagnent. Celles-ci sont présentées à titre indicatif et nullement limitatif de l'invention. Les figures montrent :
- Figure 1 : une vue schématique, éclatée et en coupe, d'un dispositif de fixation et de deux éléments de structure avant assemblage, selon un mode de réalisation de l'invention ;
- Figure 2 : une vue schématique, éclatée et en coupe, d'un dispositif de fixation et de deux éléments de structure avant assemblage, selon un autre mode de réalisation de l'invention ;
- Figure 3 : une vue schématique, éclatée et en coupe, d'un dispositif de fixation et de deux éléments de structure avant assemblage, selon un autre mode de réalisation de l'invention.

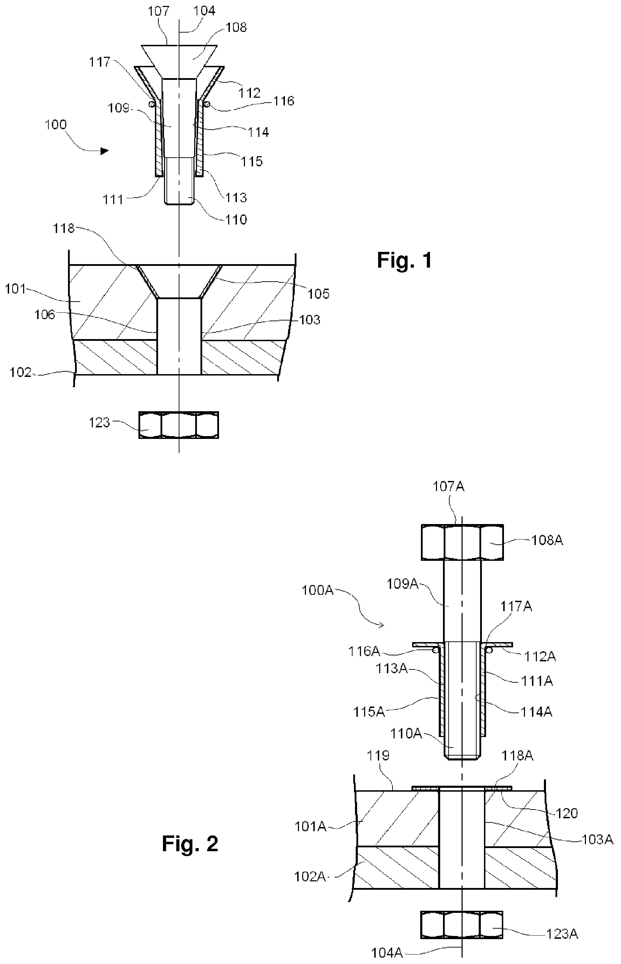

La figure 1 représente une vue schématique d'un dispositif 100 de fixation, d'un premier élément 101 de structure et d'un deuxième élément 102 de structure selon un mode de réalisation de l'invention.

Les éléments (101, 102) de structure comprennent un perçage 103 disposé selon un axe 104. Dans l'exemple présenté à la figure 1, le perçage 103 comporte une fraisure 105 et une paroi 106 cylindrique traversant les premier et deuxième éléments (101, 102) de structure.

Le dispositif 100 de fixation comporte une vis 107 s'étendant suivant l'axe 104. La vis 107 comporte une tête 108 fraisée, un fût 109 tronconique et une portion 110 filetée disposée à l'opposé de la tête 112.

Le dispositif 100 de fixation comporte également une douille 111 s'étendant suivant l'axe 104. La douille 111 est apte à être insérée dans le perçage 103.

La douille 111 comporte une tête 112 apte à accueillir la tête 108 de la vis 107. Dans l'exemple présenté à la figure 1, la tête 112 de la douille 111 est de forme fraisée.

La douille 111 comporte en outre un corps 113 apte à accueillir le fût 109 de la vis 107. Une surface 114 interne du corps 113 de la douille 111 est de forme sensiblement complémentaire avec le fût 109 de la vis 107. Ainsi, dans l'exemple présenté à la figure 1, la surface 114 interne du corps 113 est de forme tronconique. Une surface 115 externe du corps 113 de la douille 111 est de forme sensiblement complémentaire avec la paroi 106 du perçage 103. Ainsi, dans l'exemple présenté à la figure 1, la surface 115 externe du corps 113 est cylindrique.

Le dispositif 100 de fixation est destiné à être monté dans les éléments (101, 102) de structure avec interférence. Dans l'exemple présenté à la figure 1, le montage avec interférence est réalisé comme suit. Le fût 109 de la vis 107 présente, à même hauteur selon l'axe 104, un diamètre plus grand qu'un diamètre de la surface 114 interne du corps 113 de la douille 111, de sorte que l'insertion de la vis 107 dans la douille 111 provoque une expansion radiale de ladite douille. Un diamètre de la surface 115 externe de la douille 111 est, avant insertion de la vis 107, inférieur à un diamètre du perçage 103, de sorte que la douille 111 soit introduite dans le perçage 103 avec un jeu positif. Enfin, l'insertion du fût 109 de la vis 107 dans la douille 111 provoque l'expansion du diamètre externe de ladite douille, de sorte à assurer le blocage du dispositif 100 de fixation selon l'axe 104.

Le dispositif 100 de fixation comporte en outre un anneau 116 en matériau solide et compressible. L'anneau 116 est solidaire de la surface 115 externe du corps 113 de la douille 111. L'anneau 116 est proche de la tête 112 de la douille 111. De préférence, l'anneau 116 est disposé au niveau du rayon 117 sous tête de la douille 111, c'est-à-dire à l'intersection entre la tête 112 et le corps 113 de la douille 111. L'anneau 116 est configuré de sorte à être comprimé contre la paroi 106 cylindrique du perçage 103.

La fraisure 105 du perçage 103 est revêtue d'une couche 118 d'une composition, à l'état visqueux ou liquide avant installation du dispositif 100 de fixation dans le perçage 103. La composition à l'état visqueux ou liquide est par exemple du mastic frais. De préférence, la couche 118 de mastic frais est disposée sur toute la périphérie de la fraisure 105, de sorte à étanchéifier l'assemblage du dispositif 100 de fixation et des premier et deuxième éléments (101, 102) de structure.

La figure 2 présente un autre mode de réalisation de l'invention dans lequel les éléments similaires conservent les mêmes références auxquelles la lettre A est ajoutée. Les caractéristiques communes avec le mode de réalisation de la figure 1 ne seront pas développées à nouveau dans la suite de la description.

La figure 2 montre une vue schématique du dispositif 100A de fixation, et des premier et deuxième éléments (101 A, 102A) de structure comprenant un perçage 103A. Dans l'exemple présenté à la figure 2, le perçage 103A comprend une paroi 106A cylindrique.

La vis 107A du dispositif 100A de fixation comporte une tête 108A cylindrique protubérante, un fût 109A de forme cylindrique, et une portion 110A filetée disposée à l'opposé de la tête 108A. La douille 111 A du dispositif 100A de fixation est munie d'une tête 112A et d'un corps 113A dont une surface 114A interne et une surface 115A externe sont de forme cylindrique.

Selon une variante de réalisation des exemples des figures 1 et 2, les parois 106, 106A des perçages 103, 103A sont tronconiques, et les surfaces externes 115, 115A des corps 113, 113A sont également tronconiques, avec le même taux de conicité.

Le diamètre du fût 109A de la vis 107A est plus grand que le diamètre de la surface 114A interne du corps 113A de la douille 111 A. Le diamètre de la surface 115A externe du corps 113A de la douille 111 A est inférieur au diamètre du perçage 103A, avant insertion de la vis 107A dans la douille 111 A. Ainsi, le dispositif 100A de fixation permet la réalisation d'un montage dans les éléments (101 A, 102A) de structure avec interférence.

La tête 112A de la douille 111 A a la forme d'une collerette sensiblement plane disposée sensiblement perpendiculairement à l'axe 104A de la vis 107A. Lorsque le dispositif 100A de fixation est assemblé aux premier et deuxième éléments (101 A, 102A) de structure, la collerette 112A est prise en étau entre une surface 119 du premier élément 101 A de structure vis 107 et la tête 108A de la vis 107A.

Une zone 120 de contact entre la collerette 112A et la surface 119 du premier élément 101 A de structure est munie de la couche 118A de mastic frais. De préférence, la couche 118A de mastic frais est disposée sur toute la périphérie de la zone 120 de contact de la collerette 108A, de sorte à étanchéifier l'assemblage du dispositif 100A de fixation et des premier et deuxième éléments (101 A, 102A) de structure.

L'anneau 116A est disposé au niveau du rayon 117A sous tête de la douille 111 A, sur la surface 115A externe du corps 113A de la douille 111 A.

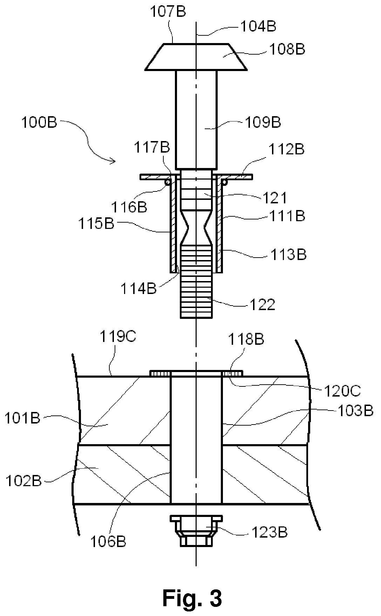

La figure 3 présente un autre mode de réalisation de l'invention dans lequel les éléments similaires aux figures 1 et 2 conservent les mêmes références auxquelles la lettre B est ajoutée, et les éléments similaires à la figure 2 seulement conservent les mêmes références auxquelles la lettre C est ajoutée. Les caractéristiques communes avec les modes de réalisation des figures 1 et 2 ne seront pas développées à nouveau dans la suite de la description.

La figure 3 montre une vue schématique du dispositif 100B de fixation, et des premier et deuxième éléments (101 B, 102B) de structure comprenant un perçage 103B. Dans l'exemple présenté à la figure 3, le perçage 103B comprend une paroi 106B cylindrique.

Le dispositif 100B de fixation comporte un rivet 107B comprenant une tête 108B protubérante, un fût 109B cylindrique, une portion 121 de blocage et une queue 122 de traction. La queue 122 de traction est disposée à l'opposé de la tête 108B du rivet 107B, et la portion 121 de blocage est disposée entre le fût 109B et la queue 122 de traction. Dans l'exemple présenté à la figure 3, la portion 121 de blocage est réalisée sous la forme de gorges de sertissage.

La douille 111 B du dispositif 100B de fixation est similaire à la douille 111 A présentée à la figure 2. La douille 111 B est munie d'une tête 112B de la forme d'une collerette et d'un corps 113B dont les surfaces (114B, 115B) interne et externe sont de forme cylindrique. Ainsi, de manière similaire à l'exemple présenté à la figure 2, une zone 120C, formant contact entre la collerette 112B et la surface 119C du premier élément 101 B de structure, est munie de la couche 118B de mastic frais.

Le diamètre du fût 109B du rivet 107B est plus grand que le diamètre de la surface 114B interne du corps 113B de la douille 111 B. Le diamètre de la surface 115B externe du corps 113B de la douille 111 B est inférieur au diamètre du perçage 103B, avant insertion du rivet 107B dans la douille 111 B. Ainsi, le dispositif 100B de fixation permet la réalisation d'un montage dans les éléments (101 B, 102B) de structure avec interférence.

Dans une variante, la tête 108B du rivet 107B est fraisée, et/ou la portion 121 de blocage est réalisée sous la forme d'un filetage apte à recevoir un écrou.

L'anneau 116B est disposé au niveau du rayon 117B sous tête de la douille 111 B, sur la surface 115B externe du corps 113B de la douille 111 B.

Des assemblages tels que montrés aux figures 1, 2 et 3 présentent l'avantage de bloquer un fluage de la couche de mastic frais vers la surface externe du corps de la douille au moyen de l'anneau comprimé entre le corps de la douille et le perçage, permettant ainsi d'éviter que l'adhérence entre la douille et le perçage soit compromise.

Le jeu que l'anneau (116, 116A, 116B) doit combler est très faible et variable. Par conséquent, l'anneau a de préférence une capacité d'écrasement assez importante pour ne pas entraver le bon montage du dispositif de fixation dans le perçage et notamment ne pas limiter l'expansion radiale de la douille dans le perçage. L'anneau (116, 116A, 116B) a également une bonne résistance à la compression, de sorte à ne pas se fissurer, ni se broyer, lors du serrage du dispositif de fixation dans les éléments de structure.

Un matériau répondant particulièrement à ces contraintes est notamment à base de polymère acrylique. Le matériau peut également comprendre du mica.

Les tableaux 1 et 2 présentent chacun un exemple de composition de mastic particulièrement adapté à la fabrication de l'anneau (116, 116A, 116B).

**Tableau 1**

| **Composants** | **Numéro CAS** | **%** |
|---|---|---|
| Polymère acrylique | - | 10 - 30 |
| Mica | 12001-26-2 | 5 -10 |
| Dioxyde de titane | 13463-67-7 | 1 - 5 |
| Polymère acrylique | 25212-88-8 | 1 - 5 |
| Quartz (SiO₂) | 14808-60-7 | 0.1 - 1 |
| Chlorure de 1-(3-Chloroallyl)-3,5,7-triaza-1-azonia-adamantane chloride | 4080-31-3 | 0.1 - 1 |

**Tableau 2**

| **Composants** | **Numéro CAS** | **%** |
|---|---|---|
| Polymère acrylique | - | 10 - 30 |
| Mica | 12001-26-2 | 5 - 10 |
| Trioxyde de difer | 1309-37-1 | 1 - 5 |
| Dioxyde de titane | 13463-67-7 | 1 - 5 |
| Polymère acrylique | 25212-88-8 | 1 - 5 |
| Propanediol-1,2 | 57-55-6 | 1 - 5 |
| Quartz (SiO₂) | 14808-60-7 | 0.1 - 1 |
| Chlorure de 1-(3-Chloroallyl)-3,5,7-triaza-1-azonia-adamantane | 4080-31-3 | 0.1 - 1 |

Les compositions Vibra-seal® 503 et Vibra-seal® 516 commercialisées par la société Loctite sont des exemples de compositions adaptées à la fabrication de l'anneau (116, 116A, 116B). Ces compositions sont connues dans l'industrie de la fixation et utilisées par application sur le filetage des vis. Une fois polymérisées, ces compositions étanchéifient les fixations de type vis / écrou au niveau de leurs filetages en prise, et limitent ou empêchent les écrous de se desserrer, lorsqu'ils ont été vissés sur des filets de vis revêtus avec l'une de ces compositions.

Le demandeur a constaté que ces compositions, une fois sèches, présentent une consistance poreuse particulièrement adaptée au problème que vise à résoudre la présente invention, contrairement à des joints en matière plastique ou caoutchouc qui ont une capacité d'écrasement limitée et une faible tenue à la compression. Ainsi, une fois sèche, la composition s'adapte au défaut de formes et de variations de volumes en se comprimant sans se fissurer ni se broyer, et en ne fluant que très peu, ce qui ne compromet pas l'intégrité de l'installation en interférence.

L'anneau (116, 116A, 116B) est par exemple fabriqué en déposant sur la douille un cordon de mastic frais répondant à la composition du tableau 1 ou du tableau 2, puis en procédant à une polymérisation à température ambiante, ou par cuisson pour accélérer le processus de polymérisation. Une fois le cordon polymérisé, le dispositif de fixation peut être monté dans les éléments de structure.

Un procédé pour former les assemblages décrits ci-dessus se déroule comme suit.

La couche (118, 118A, 118B) de mastic frais est d'abord déposée sur une partie (105, 120, 120C) du premier élément (101, 101 A, 101 B) de structure destinée à accueillir la tête (112, 112A, 112B) de la douille (111, 111 A, 111 B).

Dans l'exemple présenté à la figure 1, la couche 118 est déposée sur la fraisure 105 du perçage 103.

Dans les exemples présentés aux figures 2 et 3, la couche (118A, 118B) est déposée sur la zone (120, 120C) de contact entre la collerette (112A, 112B) de la douille (111 A, 111B) et la surface (119, 119C) du premier élément (101 A, 101 B) de structure, lorsque la douille (111 A, 111 B) est en place dans le perçage (103A, 103B).

Le rivet 107B ou la vis (107, 107A) est ensuite partiellement insérée dans la douille (111, 111 A, 111 B). On entend par « insertion partielle » le fait que la tige ou la vis est insérée sans force ou avec une force limitée dans la douille. Ainsi, l'insertion partielle de la tige ou de la vis dans la douille ne provoque pas l'expansion radiale de la douille. Typiquement, lorsque la vis ou le rivet est partiellement inséré(e) dans la douille, le fût (109, 109A, 109B) de la vis ou du rivet ressort, au moins en partie, de la douille. De même, la portion (110, 110A) filetée de la vis ou la queue 122 de traction du rivet ressort en partie de la douille.

Puis, le dispositif (100, 100A, 100B) de fixation, comprenant le rivet 107B ou la vis (107, 107A) partiellement insérée dans la douille, est mis en place avec un jeu positif dans le perçage (103, 103A, 103B), de sorte que la tête (112, 112A, 112B) de la douille (111, 111 A, 111 B) vienne en contact avec la couche (118, 118A, 118B) de mastic frais. L'anneau (116, 116A, 116B) se comprime légèrement entre la paroi cylindrique (106, 106A, 106B) du perçage (103, 103A, 103B) et la surface externe du corps de la douille, formant ainsi un barrage au fluage de la couche (118, 118A, 118B) de mastic frais vers la surface (115, 115A, 115B) externe du corps (113, 113A, 113B) de la douille (107, 107A, 107B).

Dans les exemples présentés aux figures 1 et 2, un écrou (123, 123A) est mis en place sur la portion (110, 110A) filetée de la vis (107, 107A), puis serré entraînant l'insertion complète de la vis dans la douille (111, 111 A). La vis est considérée comme complètement insérée, lorsque la tête (108, 108A) de la vis est au contact de la tête (112, 122A) de la douille. L'insertion de la vis (107, 107A) provoque l'expansion radiale de la douille (111, 111A) et la compression finale de l'anneau (116, 116A).

Dans l'exemple présenté à la figure 3, un outil est utilisé pour tirer sur la queue 122 de traction afin d'insérer complètement le rivet 107B dans la douille 111 B. La tige est considérée comme complètement insérée, lorsque la tête (108B) du rivet est au contact de la tête (112B) de la douille. L'insertion du rivet 107B provoque l'expansion radiale de la douille 111 B et la compression finale de l'anneau 116B. Selon le type de rivet employé, soit une bague 123B est sertie sur la portion 121 de blocage puis la queue 122 de traction est cassée, soit le rivet est cassé puis la bague 123B est sertie sur la portion 121 de blocage. Selon une variante dans laquelle la portion 121 de blocage est un filetage, un écrou est serré sur le filetage.

Enfin, une dernière étape consiste à laisser l'assemblage sécher afin que le mastic de la couche (118, 118A, 118B) solidifie pour garantir l'étanchéité de l'assemblage.

Un tel procédé d'assemblage présente l'avantage d'éviter que la couche (118, 118A, 118B) de mastic frais s'étende à l'intérieur du perçage, autour du corps (113, 113A, 113B) de la douille (111, 111A, 111 B). De cette manière, l'adhérence entre la douille (111, 111 A, 111B) et le perçage (103, 103A, 103B) nécessaire à une bonne qualité de l'assemblage du dispositif (100, 100A, 100B) de fixation et des éléments de structure est assurée.

## Revendications

1. Dispositif (100, 100A, 100B) de fixation, destiné à un assemblage d'une structure avec interposition d'une couche d'une composition visqueuse ou liquide, comportant:
- une tige (107, 107A, 107B) s'étendant selon un axe (104, 104A, 104B) et comportant une tête (108, 108A, 108B) et un fût (109, 109A, 109B);
- une douille (111, 111A, 111B) s'étendant selon l'axe de la tige, comportant une tête (112, 112A, 112B) destinée à accueillir la tête de la tige, et comportant un corps (113, 113A, 113B) destiné à accueillir le fût de la tige, le corps de la douille ayant un diamètre interne inférieur à un diamètre du fût de la tige, de sorte à ménager un jeu négatif entre la douille et le fût ;
- un anneau (116, 116A, 116B) en matériau solide et compressible-;
**caractérisé en ce que** l'anneau (116, 116A, 116B) est solidaire d'une surface (115, 115A, 115B) externe du corps de la douille et proche de la tête de la douille, ladite surface externe étant destinée à entrer en contact avec une paroi (106, 106A, 106B) d'un perçage réalisé dans un élément de structure, et **en ce que** ledit anneau est apte à se comprimer entre ladite surface externe (115, 115A, 115B) et ladite paroi (106, 106A, 106B), évitant à la composition visqueuse ou liquide de fluer depuis la tête de la douille entre ladite surface externe et ladite paroi.

2. Dispositif selon la revendication 1, dans lequel l'anneau est formé d'un matériau comportant un polymère acrylique.

3. Dispositif selon la revendication 2, dans lequel ledit matériau comporte en outre du mica.

4. Dispositif selon l'une des revendications précédentes, dans lequel l'anneau est disposé autour d'un rayon (117, 117A, 117B) sous tête de la douille.

5. Dispositif selon l'une des revendications précédentes, dans lequel la tige est une vis (107, 107A) ou un rivet (107B) comprenant une queue (122) de traction.

6. Procédé de fabrication d'un dispositif (100, 100A, 100B) de fixation selon l'une des revendications précédentes, comprenant une étape de dépôt, sur la surface (115, 115A, 115B) externe de la douille (111, 111A, 111B), d'un cordon d'un matériau polymère à l'état liquide ou visqueux, puis d'une polymérisation pour solidifier ledit matériau sous forme d'anneau (116, 116A, 116B).

7. Procédé d'assemblage d'un dispositif (100, 100A, 100B) de fixation selon l'une des revendications 1 à 5 à un élément de structure comprenant un perçage (103, 103A, 103B) apte à recevoir la douille (111, 111A, 111B) avec jeu, ledit procédé comprenant les étapes suivantes :
- dépôt d'une couche (118, 118A, 118B) d'une composition visqueuse ou liquide sur une partie (105, 120, 120C) de l'élément de structure destinée à entrer en contact avec la tête (112, 112A, 112B) de la douille ;
- mise en place de la douille dans le perçage de l'élément de structure selon l'axe (104, 104A, 104B) de la tige (107, 107A, 107B), de sorte que l'anneau (116, 116A, 116B) vienne en compression contre le perçage ;
- insertion de la tige dans la douille selon l'axe de la tige, de sorte que la douille se dilate radialement dans le perçage et que l'anneau se comprime contre le perçage.

8. Assemblage d'un dispositif (100, 100A, 100B) de fixation et d'un élément d'assemblage, ledit assemblage étant issu d'un procédé selon la revendication 7.

## Patentansprüche

1. Befestigungsvorrichtung (100, 100A, 100B), die dazu bestimmt ist, eine Struktur unter Einfügung einer Schicht mit einer viskosen oder flüssigen Zusammensetzung zusammenzufügen, die Folgendes umfasst:
- einen Stift (107, 107A, 107B), der sich längs einer Achse (104, 104A, 104B) erstreckt und einen Kopf (108, 108A, 108B) sowie einen Schaft (109, 109A, 109B) aufweist;
- eine Hülse (111, 111A, 111B), die sich längs der Achse des Stifts erstreckt und einen Kopf (112, 112A, 112B), der dazu bestimmt ist, den Kopf des Stifts aufzunehmen, und einen Körper (113, 113A, 113B), der dazu bestimmt ist, den Schaft des Stifts aufzunehmen, aufweist, wobei der Körper der Hülse einen Innendurchmesser hat, der kleiner als der Durchmesser des Schafts des Stifts ist, derart, dass zwischen der Hülse und dem Schaft ein negatives Spiel herbeigeführt wird;
- einen Ring (116, 116A, 116B) aus einem festen und komprimierbaren Material;
**dadurch gekennzeichnet, dass** der Ring (116, 116A, 116B) mit einer äußeren Oberfläche (115, 115A, 115B) des Körpers der Hülse in der Nähe des Kopfes der Hülse fest verbunden ist, wobei die äußere Oberfläche dazu bestimmt ist, mit einer Wand (106, 106A, 106B) einer Durchlochung, die in einem Strukturelement verwirklicht ist, in Kontakt zu gelangen, und dass der Ring sich zwischen der äußeren Oberfläche (115, 115A, 115B) und der Wand (106, 106A, 106B) komprimieren kann, wobei vermieden wird, dass die viskose oder flüssige Zusammensetzung vom Kopf der Hülse zwischen der äußeren Oberfläche und der Wand fließt.

2. Vorrichtung nach Anspruch 1, wobei der Ring aus einem Material gebildet ist, das ein Acrylpolymer enthält.

3. Vorrichtung nach Anspruch 2, wobei das Material außerdem Mika enthält.

4. Vorrichtung nach einem der vorhergehenden Ansprüche, wobei der Ring um einen Radius (117, 117A, 117B) unter dem Kopf der Hülse angeordnet ist.

5. Vorrichtung nach einem der vorhergehenden Ansprüche, wobei der Stift eine Schraube (107, 107A) oder einen Niet (107B) ist, die bzw. der einen Antriebszapfen (122) aufweist.

6. Verfahren für die Herstellung einer Befestigungsvorrichtung (100, 100A, 100B) nach einem der vorhergehenden Ansprüche, das einen Schritt des Ablagerns eines Streifens eines Polymermaterials im flüssigen oder viskosen Zustand auf der äußeren Oberfläche (115, 115A, 115B) der Hülse (111, 111A, 111B) und dann eine Polymerisation, um das Material in Ringform (116, 116A, 116B) zu verfestigen, umfasst.

7. Verfahren zum Zusammenfügen einer Befestigungsvorrichtung (100, 100A, 100B) nach einem der Ansprüche 1 bis 5 mit einem Strukturelement, das eine Durchlochung (103, 103A, 103B) aufweist, die die Hülse (111, 111A, 111B) mit Spiel aufnehmen kann, wobei das Verfahren die folgenden Schritte umfasst:
- Ablagern einer Schicht (118, 118A, 118B) mit einer viskosen oder flüssigen Zusammensetzung auf einem Teil (105, 120, 120C) des Strukturelements, das mit dem Kopf (112, 112A, 112B) der Hülse in Kontakt gelangen soll;
- Anordnen der Hülse in der Durchlochung des Strukturelements längs der Achse (104, 104A, 104B) des Stifts (107, 107A, 107B), derart, dass der Ring (116, 116A, 116B) gegen die Durchlochung komprimiert wird;
- Einsetzen des Stifts in die Hülse längs der Achse des Stifts, derart, dass sich die Hülse in der Durchlochung radial ausdehnt und dass sich der Ring gegen die Durchlochung komprimiert.

8. Zusammenfügung einer Befestigungsvorrichtung (100, 100A, 100B) und eines Zusammenfügungselements, wobei die Zusammenfügung sich aus einem Verfahren nach Anspruch 7 ergibt.

## Claims

1. Fastening device (100, 100A, 100B) intended for assembling a structure with interposition of a layer of a viscous or liquid composition, comprising:
- a stem (107, 107A, 107B) that extends along an axis (104, 104A, 104B) and comprises a head (108, 108A, 108B) and a shank (109, 109A, 109B);
- a bushing (111, 111A, 111B) that extends along the axis of the stem, comprising a head (112, 112A, 112B) intended to accommodate the head of the stem, and comprising a body (113, 113A, 113B) intended to accommodate the shank of the stem, the body of the bushing having an inside diameter less than a diameter of the shank of the stem, so as to form a negative clearance between the bushing and the shank;
- a ring (116, 116A, 116B) made of solid and compressible material;
**characterized in that** the ring (116, 116A, 116B) is secured to an outer surface (115, 115A, 115B) of the body of the bushing and close to the head of the bushing, said outer surface being intended to come into contact with a wall (106, 106A, 106B) of a drilled hole made in a structural element, and **in that** said ring is able to be compressed between said outer surface (115, 115A, 115B) and said wall (106, 106A, 106B), preventing the viscous or liquid composition from flowing from the head of the bushing between said outer surface and said wall.

2. Device according to Claim 1, wherein the ring is formed from a material comprising an acrylic polymer.

3. Device according to Claim 2, wherein said material also comprises mica.

4. Device according to one of the preceding claims, wherein the ring is disposed around an underhead radius (117, 117A, 117B) of the bushing.

5. Device according to one of the preceding claims, wherein the stem is a screw (107, 107A) or a rivet (107B) comprising a traction mandrel (122).

6. Method for manufacturing a fastening device (100, 100A, 100B) according to one of the preceding claims, comprising a step of depositing, on the outer surface (115, 115A, 115B) of the bushing (111, 111A, 111B), a bead of polymer material in the liquid or viscous state, followed by polymerization in order to solidify said material in the form of a ring (116, 116A, 116B).

7. Method for assembling a fastening device (100, 100A, 100B) according to one of Claims 1 to 5 with a structural element comprising a drilled hole (103, 103A, 103B) that is able to receive the bushing (111, 111A, 111B) with a clearance, said method comprising the following steps of:
- depositing a layer (118, 118A, 118B) of a viscous or liquid composition on a part (105, 120, 120C) of the structural element intended to come into contact with the head (112, 112A, 112B) of the bushing;
- positioning the bushing in the drilled hole in the structural element along the axis (104, 104A, 104B) of the stem (107, 107A, 107B) such that the ring (116, 116A, 116B) is compressed against the drilled hole;
- inserting the stem into the bushing along the axis of the stem, such that the bushing expands radially in the drilled hole and the ring is compressed against the drilled hole.

8. Assembly of a fastening device (100, 100A, 100B) and an assembly element, said assembly being produced by a method according to Claim 7.
